# FASCICULE DE BREVET EUROPEEN

(11) **EP 0 957 286 B1**
(45) Date de publication et mention de la délivrance du brevet: **25.06.2003**
(21) Numéro de dépôt: 99401009.8
(22) Date de dépôt: 23.04.1999
(51) Int. Cl.: F16F 13/14

(54) **Support hydroélastique interposé entre un groupe motopropulseur et une caisse d'un véhicule automobile**
Hydroelastisches Lager für die Lagerung einer Antriebseinheit in einer Fahrzeugkarosserie
Hydroelastic support for the suspension of an automotive vehicle drive unit to the vehicle body

(30) Priorité: 13.05.1998 FR 9806037
(43) Date de publication de la demande: 17.11.1999
(73) Titulaire: AUTOMOBILES PEUGEOT, 75116 Paris (FR); AUTOMOBILES CITROEN, 92200 Neuilly-sur-Seine (FR)
(72) Inventeur: Le Fol, Marcel, 35410 Domloup (FR)
(74) Mandataire: Lanceplaine, Jean-Claude

(56) Documents cités:
- EP-A- 0 065 298
- DE-A- 3 700 589
- FR-A- 2 726 339
- US-A- 5 556 071

## Description

La présente invention a pour objet un support hydroélastique destiné à être interposé entre deux ensembles à suspendre l'un par rapport à l'autre, notamment pour la suspension d'un groupe motopropulseur ou moteur dans une caisse d'un véhicule automobile.

Les supports hydroélastiques comportent généralement un corps formé par une masse en matériau élastomère reliant une armature supérieure et une armature inférieure fixées respectivement sur les deux éléments et une chambre de travail délimitée par ladite masse en matériau élastomère et par une cloison transversale.

De plus, ce type de supports comporte une chambre d'expansion délimitée par la cloison transversale et par une membrane inférieure souple.

Cette chambre d'expansion est reliée à la chambre de travail par un passage de communication et ces chambres sont remplies de liquide, comme par exemple de l'anti-gel.

Un tel support hydroélastique a été décrit dans le document FR-A-2 726 339.

Dans ce document, la chambre d'expansion est disposée latéralement par rapport à la chambre de travail et la membrane souple obturant en partie la chambre d'expansion est formée par un prolongement de la masse en matériau élastomère du corps.

L'armature supérieure du corps est constituée par un organe tubulaire de section cylindrique s'étendant perpendiculairement à l'axe principal du support et l'ensemble comprenant la masse en matériau élastomère et les deux armatures ainsi que la chambre de travail et la chambre d'expansion est disposé à l'intérieur d'un boîtier.

Un tel type de support hydroélastique est complexe et a des dimensions importantes compte tenu de sa configuration et son coût de fabrication et de montage est élevé.

L'invention a pour but d'éviter ces inconvénients en proposant un support hydroélastique compact et de montage simplifié et qui assure efficacement les différentes fonctions notamment de support du groupe motopropulseur, de filtrage de vibrations et de limitation des débattements.

L'invention a donc pour objet un support hydroélastique destiné à être interposé entre deux éléments à suspendre l'un par rapport à l'autre, notamment pour la suspension d'un groupe motopropulseur dans une caisse de véhicule automobile, ledit support comprenant :
- un corps formé par une masse en matériau élastomère reliant une armature supérieure et une armature inférieure fixées respectivement sur les deux éléments, ladite armature supérieure étant formée par un organe tubulaire s'étendant perpendiculairement à l'axe principal du support,
- une chambre de travail délimitée par la masse en matériau élastomère et par une cloison transversale et remplie de liquide,
- une chambre d'expansion remplie de liquide et reliée à ladite chambre de travail,
- et un boîtier fixé sur l'armature inférieure du corps et coiffant ce corps, ledit boîtier comportant sur deux faces opposées une ouverture au niveau de chacune desquelles débouche une extrémité de l'organe tubulaire,
caractérisé en ce que la chambre d'expansion est délimitée par la cloison transversale et par une membrane inférieure souple disposée au-dessous de ladite cloison et fixée sur l'armature inférieure du corps, ladite chambre d'expansion étant reliée à la chambre de travail par un passage de communication, en ce que l'une des ouvertures est formée par une fenêtre de section complémentaire à la section de l'extrémité correspondante de l'organe tubulaire et en ce que la masse en matériau élastomère comporte des organes de butée coopérant avec les parois du boîtier pour assurer les reprises des efforts dans toutes les directions de sollicitation dudit support.

Selon d'autres caractéristiques de l'invention:
- l'organe tubulaire présente une section parallélépipèdique,
- la masse en matériau élastomère comporte un organe de butée de reprise des efforts en attaque formé par un bossage ménagé sur la face inférieure de l'extrémité de l'organe tubulaire débouchant dans la fenêtre du boîtier et destiné à coopérer avec le rebord inférieur de ladite fenêtre,
- la masse en matériau élastomère comporte un organe de butée de reprise des efforts en détente formé un bossage ménagé sur la face supérieure de l'organe tubulaire et destiné à coopérer avec la paroi supérieure du boîtier,
- la masse en matériau élastomère comporte des organes de butée latéraux formés par deux bossages ménagés chacun sur une face latérale de l'organe tubulaire et destinés à coopérer avec une paroi latérale du boîtier,
- le boîtier est formé par une pièce emboutie en acier ou par une pièce moulée en aluminium ou en alliage d'aluminium.

Les caractéristiques et avantages de l'invention apparaîtront au cours de la description qui va suivre, donnée à titre d'exemple et faite en référence aux dessins annexés, sur lesquels :
- la Fig. 1 est une vue en coupe axiale d'un support hydroélastique conforme à l'invention,
- la Fig.2 est une vue en coupe selon la ligne 2-2 de la Fig. 1,
- la Fig. 3 est une vue schématique en perspective du boîtier du support hydroélastique conforme à l'invention,
- la Fig. 4 est une vue schématique en perspective du corps du support hydroélastique conforme à l'invention.

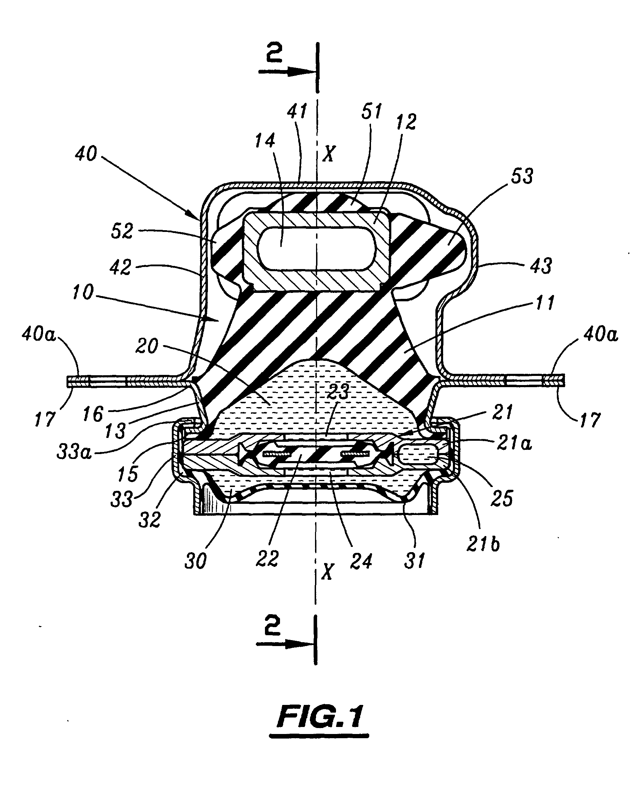

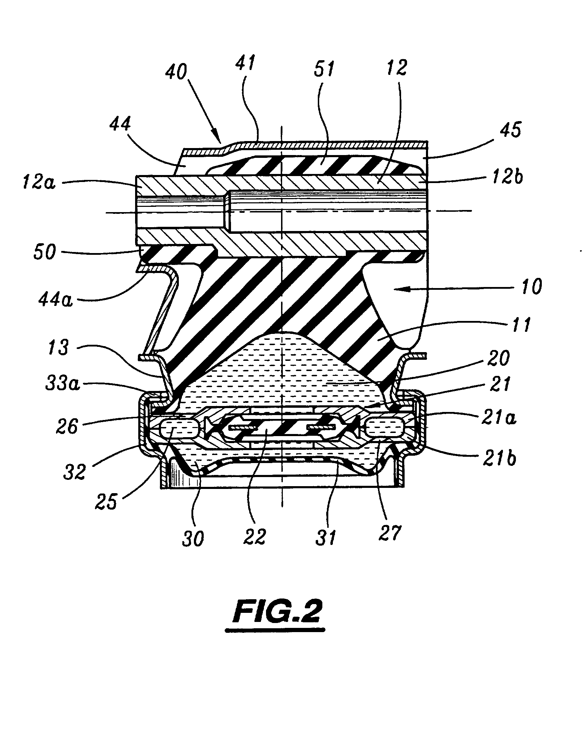

Le support hydroélastique représenté sur les Figs. 1 et 2 est adapté pour être interposé entre deux ensembles à suspendre l'un par rapport à l'autre et plus particulièrement pour être interposé entre un groupe motopropulseur et le reste de la structure ou châssis de ce véhicule.

Le support hydroélastique comprend un corps 10 formé par une masse en matériau élastomère 11 qui relie, d'une part, une armature supérieure 12 en acier ou en aluminium et, d'autre part, une armature inférieure 13 en acier.

L'armature supérieure 12 est formée par un organe tubulaire s'étendant perpendiculairement à l'axe principal XX du support et comportant un perçage axial 14 pour le passage d'un organe de liaison, non représenté, avec l'élément à supporter, comme par exemple le groupe motopropulseur d'un véhicule automobile.

Dans l'exemple de réalisation représenté sur les figures, l'organe tubulaire 12 a de préférence une section parallélépipèdique.

L'armature inférieure 13 comporte un rebord inférieur 15 replié vers l'extérieur et un rebord supérieur 16 muni de pattes de fixation 17 sur la caisse du véhicule, comme par exemple un longeron.

Le corps 10 est réalisé par surmoulage et adhérisation de l'élastomère sur les armatures 12 et 13.

La masse 11 en matériau élastomère délimite à sa partie inférieure et en partie une chambre de travail 20.

Cette chambre de travail 20 est également délimitée par une cloison transversale désignée dans son ensemble par la référence 21 et qui se compose d'une première partie 21a et d'une seconde partie 21b, lesdites parties 21a et 21b étant symétriques l'une par rapport à l'autre.

Entre les deux parties 21a et 21b de la cloison transversale 21 est interposé un clapet 22 de découplage hydraulique et la première partie 21a est munie d'un passage axial 23 permettant au clapet 22 de recevoir la pression du liquide induite dans la chambre de travail 20.

De même la seconde partie 21b de la cloison transversale 21 comporte un passage axial 24.

Les faces en regard des deux parties 21a et 21b comportent chacune une gorge qui détermine un conduit 25 de longueur importante par rapport à son diamètre communiquant avec la chambre de travail 20 par un orifice 26 ménagé dans la première partie 21a et avec une chambre d'expansion 30 par un orifice 27 ménagé dans la seconde partie 21b de la cloison transversale 21.

La chambre d'expansion 30 est délimitée par une membrane inférieure souple 31 en élastomère.

Cette membrane souple 31 comporte un rebord périphérique 32 qui est adhérisé dans une armature externe 33 munie à sa partie supérieure d'un rebord 33a de sertissage sur le rebord 15 de l'armature inférieure 13 du corps 10.

Le support hydroélastique comporte également un boîtier 40 qui coiffe le corps 10 et qui est fixé sur l'armature inférieure 17 au moyen de pattes 40a.

Le boîtier 40 est formé par une pièce emboutie en acier ou par une pièce moulée en aluminium ou en alliage d'aluminium.

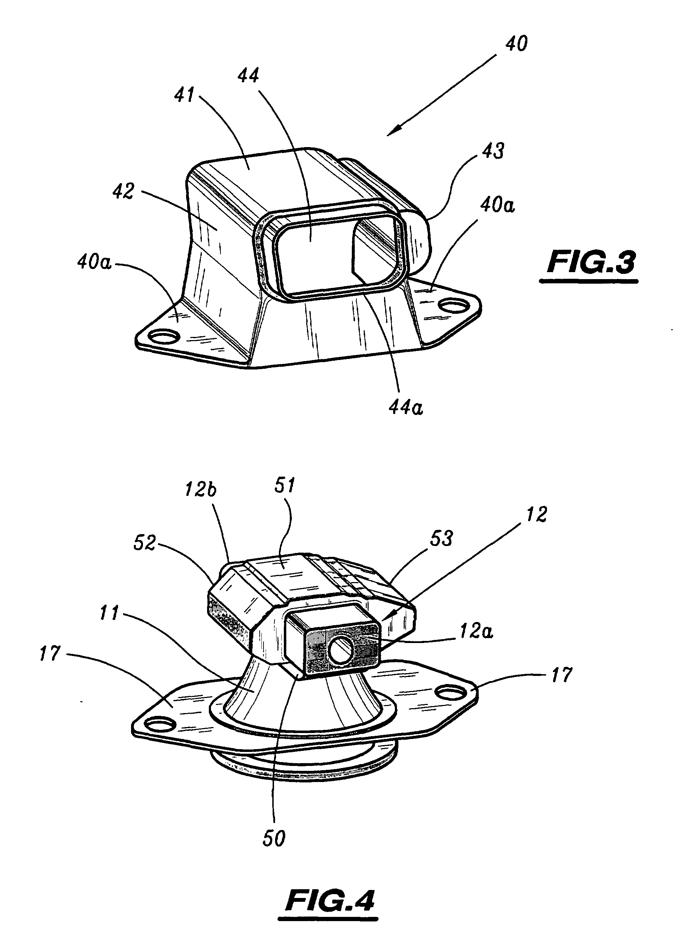

Ce boîtier 40 représenté plus particulièrement à la Fig. 3 comporte une face supérieure formée par une paroi pleine 41 et quatre faces latérales dont deux opposées forment des parois pleines, respectivement 42 et 43, et dont les deux autres opposées comportent chacune une ouverture, respectivement 44 et 45.

Ainsi que représenté à la Fig.2, l'extrémité 12a de l'organe tubulaire 12 débouche dans l'ouverture 44 et l'extrémité opposée 12b dudit organe tubulaire 12 débouche dans l'ouverture 45.

L'ouverture 44 est formée par une fenêtre de section complémentaire à la section de l'extrémité 12a de l'organe tubulaire 12 et cette fenêtre présente une section parallélépipèdique (Fig. 3).

Par contre, l'ouverture 45 s'étend sur toute la hauteur du boîtier 40.

D'une manière générale, la masse 11 en matériau élastomère du corps 10 comporte des organes de butée coopérant avec les parois du boîtier 40 pour assurer la reprise des efforts dans toutes les directions de sollicitation du support, c'est à dire pour assurer le filtrage du hachis et du bourdonnement, limiter les débattements en attaque et en détente et reprendre les efforts en accélération et en freinage.

A cet effet et comme représenté plus particulièrement à la Fig. 4, la masse 11 en matériau élastomère comporte un organe de butée 50 de reprise des efforts en attaque formé par un bossage ménagé sur la face inférieure de l'extrémité 12a de l'organe tubulaire 12 débouchant dans la fenêtre 44 et destiné à coopérer avec le rebord inférieur 44a de ladite fenêtre.

Cet organe de butée 50 est adapté à venir en contact avec le rebord 44a en limitant le déplacement de l'armature supérieure 12 vers l'armature inférieure 13.

La masse 11 en matériau élastomère comporte aussi un organe de butée 51 de reprise des efforts en détente formé par un bossage ménagé sur la face supérieure de l'organe tubulaire 12 et destiné à coopérer avec la paroi supérieure 41 du boîtier 40.

Cet organe de butée 51 est adapté à venir en contact contre la paroi supérieure 41 en limitant le déplacement de l'armature supérieure 12 en éloignement par rapport à l'armature inférieure 13.

Enfin, la masse 11 en matériau élastomère comporte également des organes de butée latéraux, respectivement 52 et 53, formés par deux bossages ménagés chacun sur une face latérale de l'organe tubulaire 12 et destinés à coopérer avec une paroi latérale, respectivement 42 et 43, du boîtier 40.

Les organes de butée 50, 51, 52 et 53 peuvent être réalisés par un procédé bi-injection en un matériau élastomère différent de celui constituant la masse 11 du corps 10.

Les organes de butée 52 et 53 sont adaptés à venir une contact avec les parois 42 et 43 du boîtier 40 lorsque l'armature supérieure 12 est déplacée dans une direction sensiblement perpendiculaire à l'axe XX du support hydroélastique.

Par conséquent, les organes de butée 50, 51, 52 et 53 ménagés sur la masse 11 en matériau élastomère et coopérant avec les parois correspondantes du boîtier 40 assurent la reprise des efforts dans toutes les directions de sollicitation du support.

Le montage du support hydroélastique qui peut être effectué automatiquement, semi-automatiquement ou manuellement est réalisé de la façon suivante.

Tout d'abord, le corps 10 est posé sur un appui dans une position inverse à celle représentée aux Figs. 1 et 2.

Ensuite, les différents composants formés par la première partie 21a de la cloison transversale 21, le clapet 22 et la seconde partie 21b de ladite cloison transversale 21 sont placés sur le corps 10.

La membrane inférieure 31 est positionnée sur la seconde partie 21b de la cloison transversale 21 et le bord 33a de l'armature externe 33 est serti sur le bord 15 de l'armature inférieure 13 du corps 10, ainsi que représenté aux Figs. 1 et 2.

Les chambres 20, 25 et 30 sont remplies de liquide soit par immersion, soit par remplissage sous vide.

Enfin, le boîtier 40 est fixé sur l'armature inférieure 13 du corps 10 et ce boîtier 40 ne recouvre que la partie supérieure dudit support hydroélastique.

En effet, l'ensemble de la partie inférieur du corps 10 sur laquelle sont fixés les autres composants, c'est à dire la cloison transversale 21 et la membrane souple 31, sont en dehors du boîtier 40 ce qui autorise le montage de ces composants indépendamment dudit boîtier 40.

Le support hydroélastique selon l'invention présente l'avantage d'être compact et d'une conception simplifiée permettant de diminuer le coût de l'ensemble ainsi que celui du montage.

Les organes de butée répartis sur l'armature supérieure du corps coopérant avec les parois du boîtier assurent donc la reprise des efforts dans toutes les directions de sollicitation du support et du fait de la forme parallélépipèdique de cette armature supérieure, les attaques desdits organes de butée sur les parois de ce boîtier sont plus franches.

Le support hydroélastique selon l'invention présente également l'avantage de ne comporter aucun organe de butée à l'intérieur de la masse en matériau élastomère du corps et permet d'éviter de rapporter des organes de butée sur des pièces supplémentaires fixés sur le longeron du véhicule automobile.

## Revendications

1. Support hydroélastique destiné à être interposé entre deux éléments à suspendre l'un par rapport à l'autre, notamment pour la suspension d'un groupe motopropulseur dans une caisse d'un véhicule automobile, ledit support comprenant :
- un corps (10) formé par une masse (11) en matériau élastomère reliant une armature supérieure (12) et une armature inférieure (13) fixées respectivement sur les deux éléments, ladite armature supérieure étant formée par un organe tubulaire (12) s'étendant perpendiculairement à l'axe principal du support,
- une chambre de travail (20) délimitée par la masse (11) en matériau élastomère et par une cloison transversale (21) et remplie de liquide,
- une chambre d'expansion (30) remplie de liquide et reliée à ladite chambre de travail (20),
- et un boîtier (40) fixé sur l'armature inférieure (13) du corps (10) et coiffant ce corps (10), ledit boîtier (40) comportant sur deux faces opposées une ouverture (44, 45) au niveau de chacune desquelles débouche une extrémité de l'organe tubulaire (12),
**caractérisé en ce que** la chambre d'expansion (30) est délimitée par la cloison transversale (21) et par une membrane inférieure souple (31) disposée au-dessous de ladite cloison (21) et fixée sur l'armature inférieure (13) du corps (10), ladite chambre d'expansion (30) étant reliée à la chambre de travail (20) par un passage de communication (25, 26, 27), **en ce que** l'une des ouvertures est formée par une fenêtre (44) de section complémentaire à la section de l'extrémité (12a) correspondante de l'organe tubulaire (12) et **en ce que** la masse (11) en matériau élastomère comporte des organes de butée (50, 51, 52, 53) coopérant avec les parois du boîtier pour assurer la reprise des efforts dans toutes les directions de sollicitation dudit support.

2. Support hydroélastique selon la revendication 1, **caractérisé en ce que** l'organe tubulaire (12) présente une section parallélépipèdique.

3. Support hydroélastique selon la revendication 1 ou 2, **caractérisé en ce que** la masse (11) en matériau élastomère comporte un organe de butée (50) de reprise des efforts en attaque formé par un bossage ménagé sur la face inférieure de l'extrémité (12a) de l'organe tubulaire (12) débouchant dans la fenêtre (44) du boîtier (40) et destiné à coopérer avec le rebord inférieur (44a) de ladite fenêtre (44).

4. Support hydroélastique selon la revendication 1 ou 2, **caractérisé en ce que** la masse (11) en matériau élastomère comporte un organe de butée (51) de reprise des efforts en détente formé par un bossage ménagé sur la face supérieure de l'organe tubulaire (12) et destiné à coopérer avec la paroi supérieur (41) du boîtier (40).

5. Support hydroélastique selon la revendication 1 ou 2, **caractérisé en ce que** la masse (11) en matériau élastomère comporte des organes de butée latéraux (52, 53) formés par deux bossages ménagés chacun sur une face latérale de l'organe tubulure (12) et destinés à coopérer avec les parois latérales (42,43) du boîtier (40).

6. Support hydroélastique selon l'une quelconque des revendications3 à 5, **caractérisé en ce que** les organes de butée (50, 51, 52, 53) sont réalisés par un procédé de bi-injection en un matériau élastomère différent de celui constituant la masse (11) du corps (10).

7. Support hydroélastique selon l'une quelconque des revendications précédentes, **caractérisé en ce que** le boîtier (40) est formé par une pièce emboutie en acier ou par une pièce moulée en aluminium ou en alliage d'aluminium.

## Patentansprüche

1. Hydroelastisches Lager, das dazu bestimmt ist, zwischen zwei relativ zueinander zu lagernden Elementen angeordnet zu werden, insbesondere zur Aufhängung einer Triebwerksgruppe oder eines Motors in einer Karosserie eines Kraftfahrzeugs, wobei das Lager folgende Merkmale aufweist:
- einen durch eine Masse (11) aus Elastomerwerkstoff gebildeten Körper (10), der eine an dem einem Element befestigte obere Bewehrung (12) und eine an dem anderen Element befestigte untere Bewehrung (13) miteinander verbindet, wobei die obere Bewehrung durch ein rohrförmiges Organ (12) gebildet ist, das sich senkrecht zur Hauptachse des Lagers erstreckt,
- eine Arbeitskammer (20), die durch die Masse (11) aus Elastomerwerkstoff und durch eine Querwand (21) begrenzt ist und mit einer Flüssigkeit gefüllt ist,
- eine Ausdehnungskammer (30), die mit einer Flüssigkeit gefüllt ist und mit der Arbeitskammer (20) verbunden ist,
- und ein an der unteren Bewehrung (13) des Körpers (10) befestigtes und den Körper bedeckendes Gehäuse (40), das an zwei entgegengesetzten Seiten jeweils eine Öffnung (44, 45) aufweist, in deren Bereich je ein Ende des rohrförmigen Organs (12) mündet,
**dadurch gekennzeichnet, dass** die Ausdehnungskammer (30) durch die Querwand (21) und eine biegsame untere Membran (31), die unterhalb der Wand (21) angeordnet und an der unteren Bewehrung (13) des Körpers (10) befestigt ist, begrenzt ist, wobei die Ausdehnungskammer (30) durch einen Verbindungskanal (25, 26, 27) mit der Arbeitskammer (20) verbunden ist, dass eine der Öffnungen durch ein Fenster (44) gebildet ist, dessen Querschnitt komplementär zum Querschnitt des entsprechenden Endes (12a) des rohrförmigen Organs (12) ist, und dass die Masse (11) aus Elastomerwerkstoff Anschlagorgane (50, 51, 52, 53) aufweist, die mit den Wänden des Gehäuses zusammenwirken, um sicherzustellen, dass Kräfte in allen Belastungsrichtungen des Lagers aufgenommen werden.

2. Hydroelastisches Lager nach Anspruch 1, **dadurch gekennzeichnet, dass** das rohrförmige Organ (12) einen quaderförmigen Querschnitt aufweist.

3. Hydroelastisches Lager nach Anspruch 1 oder 2, **dadurch gekennzeichnet, dass** die Masse (11) aus Elastomerwerkstoff ein Anschlagorgan (50) zur Aufnahme der Arbeitskräfte aufweist, das durch einen Höcker gebildet ist, der an der Unterseite des im Fenster (44) des Gehäuses (40) mündenden Endes (12a) des rohrförmigen Organs (12) ausgebildet ist und dazu bestimmt ist, mit dem unteren Rand (44a) des Fensters (44) zusammenzuwirken.

4. Hydroelastisches Lager nach Anspruch 1 oder 2, **dadurch gekennzeichnet, dass** die Masse (11) aus Elastomerwerkstoff ein Anschlagorgan (51) zur Aufnahme der Rückstellkräfte aufweist, das durch einen Höcker gebildet ist, der an der Oberseite des rohrförmigen Organs (12) ausgebildet ist und dazu bestimmt ist, mit der oberen Wand (41) des Gehäuses (40) zusammenzuwirken.

5. Hydroelastisches Lager nach Anspruch 1 oder 2, **dadurch gekennzeichnet, dass** die Masse (11) aus Elastomerwerkstoff seitliche Anschlagorgane (52, 53) aufweist, die durch zwei Höcker gebildet sind, die an je einer Seitenfläche des rohrförmigen Organs (12) ausgebildet sind und dazu bestimmt sind, mit je einer Seitenwand (42, 43) des Gehäuses (40) zusammenzuwirken.

6. Hydroelastisches Lager nach einem der Ansprüche 3 bis 5, **dadurch gekennzeichnet, dass** die Anschlagorgane (50, 51, 52, 53) durch ein Doppelinjektionsverfahren aus einem Elastomerwerkstoff verwirklicht sind, der sich von dem die Masse (11) des Körpers (10) bildenden Werkstoff unterscheidet.

7. Hydroelastisches Lager nach einem der vorhergehenden Ansprüche, **dadurch gekennzeichnet, dass** das Gehäuse (40) durch ein tiefgezogenes Werkstück aus Stahl oder durch ein gegossenes Werkstück aus Aluminium oder einer Aluminiumlegierung gebildet ist.

## Claims

1. Hydraulic support intended to be interposed between two elements to be suspended relative to one another, particularly for the suspension of a power unit in a body of an automobile, the said support comprising:
- a body (10) formed by a block (11) of elastomer material connecting an upper reinforcing member (12) and a lower reinforcing member (13) which are fixed respectively on the two elements, the said upper reinforcing member being formed by a tubular part (12) extending perpendicular to the principal axis of the support,
- a working chamber (20) which is delimited by the block (11) of elastomer material and by a transverse partition (21) and is filled with liquid,
- an expansion chamber (30) which is filled with liquid and is connected to the said working chamber (20),
- and a housing (40) which is fixed on the lower reinforcing member (13) of the body (10) and caps this body (10), the said housing (40) having an opening (44, 45) on two opposing faces, one end of the tubular part (12) opening at the level of each of these openings,
**characterised in that** the expansion chamber (30) is delimited by the transverse partition (21) and by a flexible lower membrane (31) which is disposed below the said partition (21) and is fixed on the lower reinforcing member (13) of the body (10), the said expansion chamber (30) being connected to the working chamber (20) by a communicating passage (25, 26, 27), that one of the openings is formed by a window (44) having a section complementary to the section of the corresponding end (12a) of the tubular part, and that the block (11) of elastomer material includes stop members (50, 51, 52, 53) which co-operate with the walls of the housing in order to ensure the take-up of forces in all the directions of loading of the said support.

2. Hydroelastic support as claimed in Claim 1, **characterised in that** the tubular member (12) has a parallelepipedal section.

3. Hydroelastic support as claimed in Claim I or 2, **characterised in that** the block (11) of elastomer material includes a stop member (50) for take-up of the driving forces formed by a boss provided on the lower face of the end (12a) of the tubular part (12) opening into the window (44) of the housing (40) and intended to co-operate with the lower rim (44a) of the said window (44).

4. Hydroelastic support as claimed in Claim 1 or 2, **characterised in that** the block (11) of elastomeric material includes a stop member (51) for take-up of the relaxing forces formed by a boss provided on the upper face of the tubular part (12) and intended to co-operate with the upper wall (41) of the housing (40).

5. Hydroelastic support as claimed in Claim 1 or 2, **characterised in that** the block (11) of elastomer material includes lateral stop members (52, 53) formed by two bosses each provided on a lateral face of the tubular part (12) and intended to co-operate with the lateral walls (42, 43) of the housing (40).

6. Hydroelastic support as claimed in any one of Claims 3 to 5, **characterised in that** the stop members (50, 51, 52, 53) are produced by a process of bi-injection from an elastomer material different from the material which constitutes the block (11) of the body (10).

7. Hydroelastic support as claimed in any one of the preceding claims, **characterised in that** the housing (40) is formed by a stamped part of steel or by a moulded part of aluminium or aluminium alloy.
